# FASCICULE DE BREVET EUROPEEN

(11) **EP 3 678 900 B1**
(45) Date de publication et mention de la délivrance du brevet: **20.04.2022**
(21) Numéro de dépôt: 18762094.3
(22) Date de dépôt: 03.09.2018
(51) Int. Cl.: B60R 13/02

(54) **INSERT POUR UNE COULISSE DE VITRAGE DE VÉHICULE**
EINSATZ FÜR EINEN LAUFSCHLITTEN FÜR EIN FAHRZEUGFENSTER
INSERT FOR A RUN SLIDE FOR A VEHICLE WINDOW

(30) Priorité: 04.09.2017 FR 1758130
(43) Date de publication de la demande: 15.07.2020
(73) Titulaire: Hutchinson, 75008 Paris (FR)
(72) Inventeur: PETIT, Emmanuel, 45200 Montargis (FR); PROCHASSON, Benoît, 45260 Chailly En Gatinais (FR); DAVID, Pierre, 45200 Montargis (FR)
(74) Mandataire: Gevers & Orès
(86) Numéro de dépôt international: PCT/EP2018/073630
(87) Numéro de publication internationale: WO 2019/043228

(56) Documents cités:
- WO-A1-2016/174315
- FR-A1- 2 951 407

## Description

### DOMAINE TECHNIQUE

La présente invention concerne notamment un insert pour une coulisse de vitrage de véhicule, en particulier automobile, ainsi qu'une coulisse comportant un tel insert.

### ETAT DE L'ART

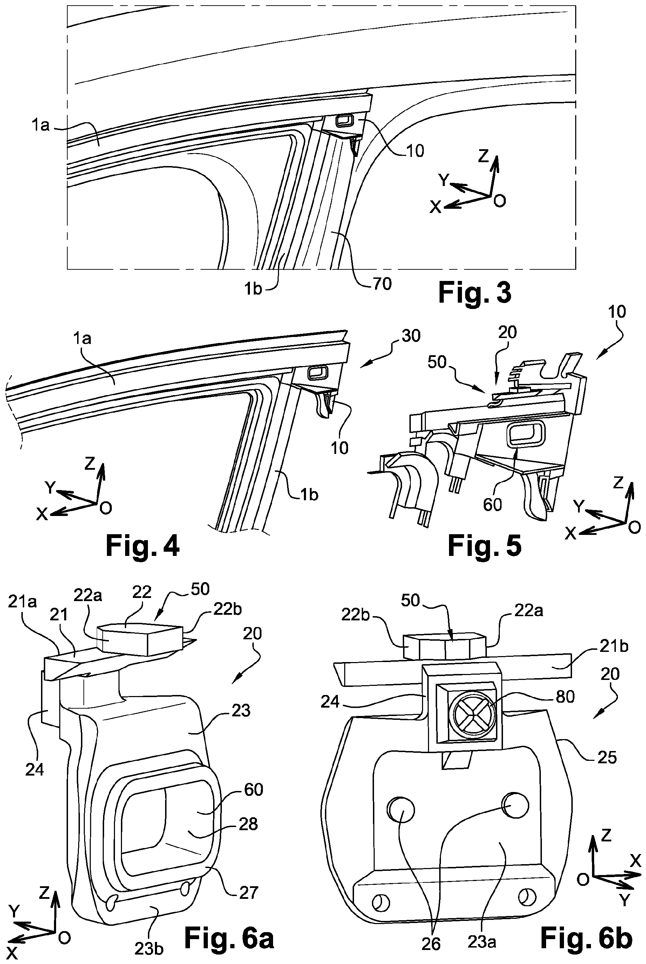

Dans un véhicule automobile, un cadre de porte est équipé d'une coulisse ou d'un joint de coulisse destiné à recevoir un vitrage coulissant. La coulisse comprend en général deux brins verticaux ou ascendants reliés entre eux par un brin horizontal ou supérieur. La coulisse a alors une forme générale en U inversé. Cette forme peut toutefois être plus complexe notamment si la coulisse est reliée à des segments d'étanchéité d'un vitrage fixe. FR 2 951 407 A1 qui est considéré comme l'état de la technique le plus proche de l'objet de la revendication 1, divulgue (alinéa [0001] - alinéa[0055); figures) un insert 43, 46 pour une coulisse 41 de vitrage de véhicule (voir alinéa [0034], figure 3), cet insert 43, 46 étant destiné à être surmoulé (voir alinéas [0052]-[0055], figure 6) pour former un coin 4 de liaison entre deux brins 41 de la coulisse, l'insert 43, 46 étant formé d'une seule pièce (voir alinéa [0051]) et comportant des premiers moyens d'indexage 48 configurés pour coopérer avec une portion 21 d'un cadre de porte 2 du véhicule (voir alinéa [0042], figure 3) et des seconds moyens d'indexage (les seconds moyens d'indexage sont constitués par l'ouverture ménagée dans le fût 48 et l'entretoise 47 pour recevoir la vis 52, voir revendication 5, ainsi que par la fente dédiée pratiquée sur l'embase 43 pour recevoir le crochet présent à une extrémité de l'enjoliveur 51, voir alinéa [0046). figure 3) configurés pour coopérer avec une portion d'un enjoliveur 51 (la vis 52 qui appartient à l'enjoliveur 51 coopère avec l'ouverture ménagée dans le fût 48 et l'entretoise 47, le crochet de l'enjoliveur 51 coopère avec la fente dédiée pratiquée sur l'embase 43, voir figure 3) destiné à être rapporté sur l'un desdits brins 41 (voir figure 3), lesdits premiers moyens comprenant au moins un pion 48 en saillie configuré pour être engagé dans une encoche 21 d'une feuillure du cadre de porte 2 du véhicule afin d'assurer un indexage dudit insert selon un axe X sensiblement parallèle à un axe d'allongement de la feuillure 2 (voir alinéa [0042], figure 3, l'axe X étant constitué par l'axe horizontal sur la figure 3), et lesdits seconds moyens étant configurés pour coopérer par complémentarité de formes avec ladite portion de l'enjoliveur afin d'assurer un indexage dudit enjoliveur 51 selon ledit axe X ainsi que selon un axe Z perpendiculaire à X et sensiblement parallèle à un axe d'allongement dudit enjoliveur 51 : aussi bien la vis 52 de l'enjoliveur 51 par sa coopération avec l'ouverture ménagée dans le fût 48 et l'entretoise 47, que le crochet de l'enjoliveur 51 par sa coopération la fente dédiée pratiquée sur l'embase 43. participent an blocage dudit insert 43, 46 selon les axes horizontaux et verticaux de la figure 3.

D'une manière générale, on peut distinguer trois grandes familles parmi les coulisses, à savoir les coulisses en U, les coulisses monofeuillures et les coulisses cadre caché. Ces dernières présentent une pince de fixation à section droite en U qui se chausse sur le cadre de porte et qui comprend une armature métallique pour renforcer la tenue de la pince, deux jambes dissymétriques équipées de lèvres d'étanchéité, et une ou deux lèvres supplémentaires assurant une fonction de double étanchéité.

Les brins d'une coulisse sont réalisés dans un matériau approprié tel qu'un thermoplastique ou un élastomère (par exemple EPDM) puis sont reliés ensemble par surmoulage de coins. Un premier coin avant permet de relier l'extrémité avant du brin horizontal au brin vertical avant, et un second coin arrière permet de relier l'extrémité arrière du brin horizontal au brin vertical arrière. Le matériau des coins peut également être un thermoplastique ou un élastomère (par exemple EPDM). En pratique, les extrémités précitées des brins sont disposées dans la cavité d'un moule dans laquelle est injecté ce matériau qui, après refroidissement et/ou réticulation, assure la liaison des brins.

Il est connu d'intégrer un insert dans le coin surmoulé d'une coulisse, en particulier le coin correspondant au pied milieu de la porte, à savoir le coin arrière pour une vitre de porte avant et le coin avant pour une vitre de porte arrière. Cet insert est en général en matière plastique et disposé dans la cavité précitée du moule de façon à être intégré au coin lors de son surmoulage.

L'assemblage d'une coulisse à cadre caché sur un cadre de porte se fait généralement par clippage du brin horizontal sur la feuillure de cadre en vis-à-vis suivant une direction Y, à savoir une direction latérale par rapport à la direction d'avance du véhicule (dans un repère orthonormé XYZ, l'axe X correspond à la direction de déplacement du véhicule, vers l'avant ou vers l'arrière, et est donc sensiblement horizontale, l'axe Y correspondant à une direction transversale, et l'axe Z à une direction perpendiculaire aux axes X et Y et donc sensiblement verticale).

La coulisse une fois clippée est très difficile à faire coulisser suivant l'axe X, qui est sensiblement parallèle à l'axe longitudinal de la feuillure. L'insert du coin de coulisse comprend en général un évidement libre de matière surmoulée et qui est destiné à recevoir un plot d'indexage présent sur la porte, généralement sur le pied milieu, en léger contrebas par rapport à la feuillure. Ceci assure un indexage correct suivant l'axe X de la coulisse, et évite le démontage pour repositionnement de la pièce.

L'inconvénient de cette solution est l'encombrement du plot d'indexage qui est assez fragile et qui se situe derrière la coulisse. La pose de la coulisse est donc complexe car elle se fait quasiment à l'aveugle.

D'autre part, une fois l'ensemble des brins correctement positionnés sur le cadre de porte, des caches, enjoliveurs ou « appliqués », sont généralement rapportés et montés sur la coulisse, par exemple au niveau du pied milieu ou pied arrière. Il est nécessaire d'assurer un positionnement relatif correct selon les axes X et Z de ces éléments, et il est parfois prévu une saillie à cet effet dans le coin moulé.

Enfin, pour des facilités de contrôle dimensionnel de la coulisse en sortie de ligne de fabrication, on intègre généralement au moins une mire au coin moulé, ce qui permet des contrôles au laser par exemple. Toutefois, la présence d'une mire sur le coin et donc la matière moulée demande un usinage particulier du moule pour la formation d'une empreinte de réalisation de la mire, et donc représente un coût supplémentaire. De plus, cette empreinte peut s'user au cours des utilisations du moule et peut nécessiter une opération régulière de réusinage du moule afin de reformer l'empreinte dans le moule.

L'invention propose une solution simple, efficace et économique à au moins une partie de ces problèmes.

### EXPOSE DE L'INVENTION

L'invention propose à cet effet un insert pour une coulisse de vitrage de véhicule, cet insert étant destiné à être surmoulé pour former un coin de liaison entre deux brins de la coulisse, l'insert étant formé d'une seule pièce et comportant des premiers moyens d'indexage configurés pour coopérer avec une portion d'un cadre de porte du véhicule et des seconds moyens d'indexage configurés pour coopérer avec une portion d'un enjoliveur destiné à être rapporté sur l'un desdits brins, caractérisé en ce que lesdits premiers moyens comprennent au moins un pion en saillie configuré pour être engagé dans une encoche d'une feuillure du cadre de porte du véhicule afin d'assurer un indexage dudit insert selon un axe X sensiblement parallèle à un axe d'allongement de la feuillure, et en ce que lesdits seconds moyens sont configurés pour coopérer par complémentarité de formes avec ladite portion de l'enjoliveur afin d'assurer un indexage dudit enjoliveur selon ledit axe X ainsi que selon un axe Z perpendiculaire à X et sensiblement parallèle à un axe d'allongement dudit enjoliveur.

L'insert est ainsi configuré pour assurer un positionnement précis selon l'axe X de la coulisse sur le cadre de porte, ainsi qu'un positionnement précis de l'enjoliveur selon les axes X et Z vis-à-vis de la coulisse. Ceci implique la présence d'une encoche sur la feuillure du cadre de porte, qui remplace le pion de la technique antérieure. Cette encoche est relativement simple à réaliser. Elle est de plus visible et accessible par un opérateur, ce qui facilite le positionnement et le montage de la coulisse sur le cadre de porte.

L'insert selon l'invention peut comprendre une ou plusieurs des caractéristiques suivantes, prises isolément les unes des autres ou en combinaison les unes avec les autres :
- l'insert comprend un plateau configuré pour s'étendre parallèlement à la feuillure et sur lequel est situé en saillie ledit pion ; ce plateau peut prendre appui sur la feuillure et faciliter le positionnement de la coulisse,
- l'insert comprend une plaque configurée pour s'étendre perpendiculairement à un plan de la feuillure et sur une face de laquelle sont situés lesdits seconds moyens,
- la plaque comprend une face extérieure sur laquelle sont situés lesdits seconds moyens, et une face intérieure sur laquelle sont situés des plots de positionnement et/ou d'ancrage ; ces plots sont en général configurés pour assurer une position correcte de l'insert dans le moule lors de l'injection, et peuvent faciliter l'accroche de la matière surmoulée sur l'insert,
- le plateau et la plaque sont reliés par une liaison amincie,
- l'insert comprend au moins une mire ; la mire du coin de la coulisse était située sur la matière surmoulée dans l'état de l'art et est ici situé sur l'insert ; ceci évite le problème précité de la technique antérieure,
- l'insert comprend une première mire qui est située sur une face intérieure de ladite partie amincie ; avantageusement, cette mire est laissée libre de matière surmoulée lors de la fabrication du coin de coulisse,
- l'insert comprend une seconde mire qui est située sur une face extérieure de ladite plaque ; avantageusement, cette seconde mire est laissée libre de matière surmoulée lors de la fabrication du coin de coulisse ; elle est par exemple située au niveau desdits seconds moyens, - lesdits seconds moyens comprennent un évidement configuré pour recevoir ladite portion de l'enjoliveur,
- ladite seconde mire est située dans ledit évidement,
- la ou chaque mire peut se présenter sous la forme d'un trait, de deux traits entrecroisés, d'un cercle, etc., ou d'une combinaison de ces formes,
- ledit évidement a en section une forme générale trapézoïdale dont une grande base est située au niveau d'une ouverture dudit évidement et une petite base est située au niveau d'un fond dudit évidement ; la forme trapézoïdale facilite le positionnement de l'enjoliveur,
- lesdits seconds moyens comprennent un rebord périphérique en O formé en saillie sur ladite face extérieure et définissant intérieurement ledit évidement, cette forme périphérique facilite le positionnement de l'enjoliveur à la fois par coulissement et appui, et ce selon les axes X et Z à la fois.

L'invention concerne également une coulisse de vitrage de véhicule, comportant au moins deux brins, tels qu'un brin horizontal et un brin vertical, reliés ensemble par un coin surmoulé dans lequel est intégré un insert tel que décrit ci-dessus.

La coulisse selon l'invention peut comprendre une ou plusieurs des caractéristiques suivantes, prises isolément les unes des autres ou en combinaison les unes avec les autres :
- lesdits premiers et seconds moyens sont libres de matière surmoulée,
- ledit pion et ledit plateau sont libres de matière surmoulée,
- la ou chaque mire est libre de matière surmoulée.

L'invention propose en outre un insert pour une coulisse de vitrage de véhicule, cet insert étant destiné à être surmoulé pour former un coin de liaison entre deux brins de la coulisse, l'insert étant formé d'une seule pièce et comportant des premiers moyens d'indexage configurés pour coopérer avec une portion d'un cadre de porte du véhicule et des seconds moyens d'indexage configurés pour coopérer avec une portion d'un enjoliveur destiné à être rapporté sur l'un desdits brins, caractérisé en ce qu'il comprend en outre au moins une mire qui est configurée de façon à rester libre de matière surmoulée après réalisation dudit coin.

Cet insert peut comprendre une ou plusieurs des caractéristiques de l'insert décrites dans ce qui précède.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue en coupe d'un joint d'étanchéité formant le brin supérieur d'une coulisse de type cadre caché selon l'art antérieur évoqué en préambule,
- les figures 2a, 2b et 2c sont des vues de face schématiques pour illustrer respectivement une porte avant et une porte arrière d'un véhicule de type berline, et une porte avant d'un véhicule de type monospace,
- la figure 3 est une vue schématique partielle en perspective d'une coulisse selon l'invention disposée sur un cadre de porte d'un véhicule automobile,
- la figure 4 est une vue schématique partielle en perspective de la coulisse de la figure 3,
- la figure 5 est une vue schématique partielle en perspective du coin surmoulé de la coulisse de la figure 3,
- les figures 6a et 6b sont des vues schématiques en perspective de l'insert de la coulisse de la figure 3,
- la figure 7 est une vue schématique partielle en perspective du cadre de porte de la figure 3,
- les figures 8 et 9 sont des vues schématiques, respectivement en perspective et en coupe, de l'insert de la coulisse de la figure 3, et illustre son positionnement par rapport à une feuillure du cadre de porte et à un enjoliveur rapporté, et
- la figure 10 est une vue correspondant à celle de la figure 8 et illustre une variante de réalisation de l'insert selon l'invention.

### DESCRIPTION DETAILLEE

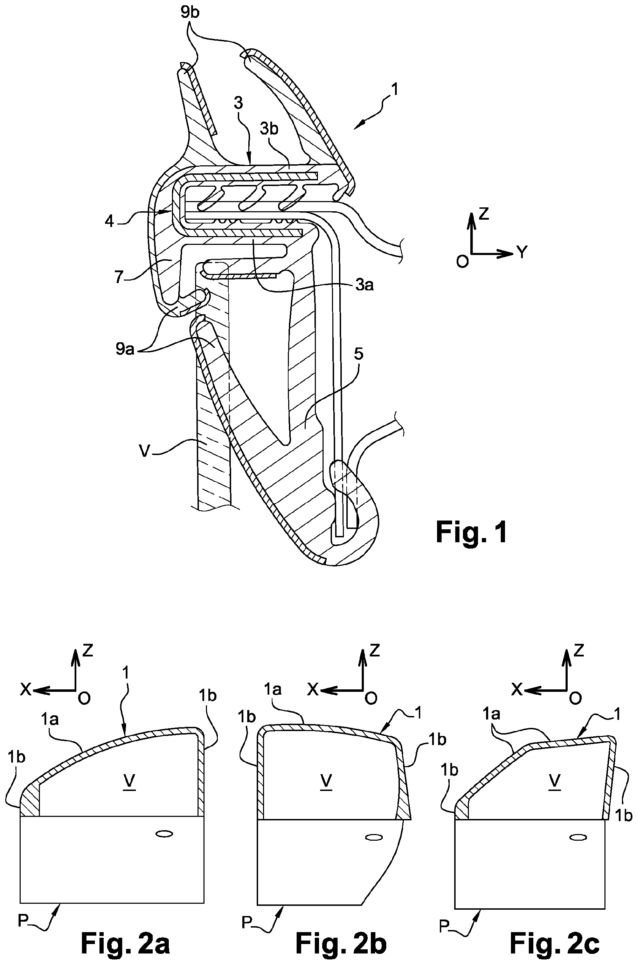

Le joint de vitrage 1 du type coulisse représenté à la figure 1 illustre l'art antérieur évoqué en préambule. Ce joint 1 qui forme un brin supérieur de coulisse, comprend une pince de fixation 3 à section droite en U dans laquelle est noyée une armature de renfort métallique 4 également à section droite en U. Cette armature est toutefois optionnelle si bien que l'invention concerne un joint ou une coulisse armé ou non armé, c'est-à-dire pourvu ou non d'une armature.

Le joint 1 comprend en outre deux jambes dissymétriques 5 et 7 respectivement principale et secondaire qui prolongent, sensiblement à 90°, une branche 3a de la pince de fixation 3 et qui se terminent par des lèvres d'étanchéité 9a aptes à venir en contact glissant avec les deux faces d'un vitrage V. L'autre branche 3b de la pince de fixation 3 supporte des lèvres d'étanchéité 9b aptes à venir en contact avec la caisse du véhicule.

On a illustré schématiquement sur les figures 2a, 2b et 2c différentes portes P d'un véhicule automobile, en faisant ressortir les formes générales des joints de vitrage formant des coulisses.

Dans le cas de la figure 2a d'une porte avant P de type berline, le brin supérieur 1a de la coulisse ou joint 1 présente un galbe important, alors qu'il présente un galbe faible dans le cas de la figure 2b d'une porte arrière P de type berline ou deux parties à galbe faible dans le cas de la figure 2c d'une porte avant P de type monospace.

Les brins latéraux verticaux 1b de chaque coulisse ou joint 1 sont rendus solidaires du brin supérieur 1a par des coins 10 surmoulés de jonction, connus en soi, ainsi que les deux parties du brin supérieur 1a de la figure 2c.

Un coin 10 est réalisé par injection d'un matériau élastomère dans la cavité d'un moule dans laquelle sont situées les extrémités des brins à relier. La cavité du moule reçoit en outre un insert plastique qui est utilisé pour faciliter le positionnement et le montage de la coulisse sur le cadre de porte.

Les figures 3 à 9 illustrent un mode de réalisation de l'invention, qui concerne notamment l'insert 20 en tant que tel ainsi que la coulisse 30 intégrant cet insert 20.

L'insert 20 seul est visible aux figures 6a et 6b. La coulisse 30 seule est représentée à la figure 4, la figure 5 montrant le coin surmoulé 10 et l'insert 20 de cette coulisse. Enfin, les figures 3, 7, 8 et 9 permettent de comprendre la coopération de l'insert 20 et de la coulisse 30 avec le cadre de porte 40 du véhicule.

Dans la description qui suit ainsi que dans l'ensemble de la demande, les indices X, Y et Z font référence aux axes d'un repère orthonormé XYZ. L'axe X correspond à la direction de déplacement du véhicule, vers l'avant ou vers l'arrière, et est donc sensiblement horizontale, l'axe Y correspond à une direction transversale, et l'axe Z à une direction perpendiculaire aux axes X et Y et donc sensiblement verticale.

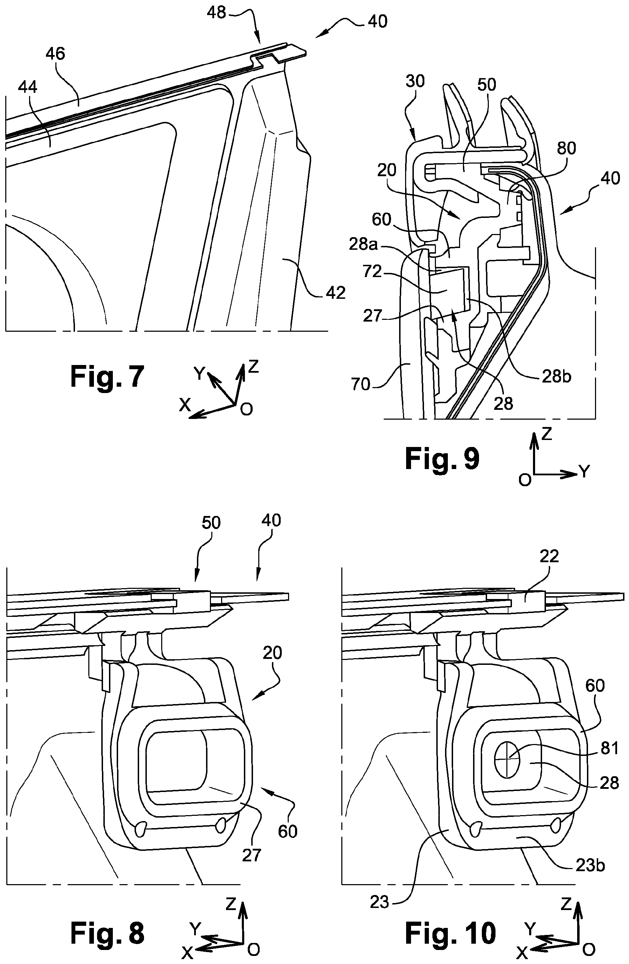

Le cadre de porte 40 (figures 7-9) comprend classiquement un montant vertical 42 formant un pied milieu dont l'extrémité supérieure est reliée à un profilé supérieur 44, le montant 42 et le profilé 44 définissant au moins en partie le cadre pour un vitrage coulissant de la porte du véhicule.

Le cadre de porte 40 comprend une feuillure 46 qui s'étend le long de son profilé supérieur 44, et plus exactement le long d'un bord supérieur de ce profilé 44. Cette feuillure 46 est formée par un rebord plié du cadre. Le cadre 40 est en général formé par l'empilement et l'assemblage d'au moins deux tôles si bien que la feuillure 46 et le rebord plié peuvent être obtenus par pliage des bords supérieurs de deux tôles, comme cela est visible à la figure 7.

La feuillure 46 s'étend sensiblement le long de l'axe X, au moins dans la zone située au voisinage du pied milieu, c'est-à-dire du montant 42. La feuillure 46 comprend une encoche 48. Elle est située au voisinage du pied milieu, et située ici sensiblement au droit du montant 42.

L'encoche 48 s'étend sensiblement selon l'axe Z, c'est-à-dire perpendiculairement à l'axe d'allongement de la feuillure 46. L'encoche 48 a par exemple une forme générale en U dont l'ouverture débouche au niveau du bord libre de la feuillure 46. L'encoche 48 comprend ici une première découpe en U d'une des tôles, à savoir la tôle inférieure, et une seconde découpe en L de l'autre tôle, à savoir la tôle supérieure (figure 7). Les découpes sont sensiblement superposées selon l'axe Z.

La figure 7 montre que les bords de la découpe en L sont situés à distance des bords de la découpe en U. Dans l'exemple représenté, les bords de la découpe en U forment des bords d'appui et de positionnement de la coulisse 30.

Le coin 10 de la coulisse peut avoir une forme complexe comme dans l'exemple de la figure 5. Il comprend des portions reliées aux brins 1a, 1b afin de les solidariser ensemble tout en assurant une continuité dans leurs profils et aspects externes.

La figure 4 permet de constater que certaines portions du coin 10 sont cachées par les brins 1a, 1b après fabrication de la coulisse 30. De même, la figure 5 permet de constater que certaines portions de l'insert 20 sont cachées par la matière surmoulée et la coulisse 30 après fabrication.

Dans l'exemple représenté, les seules portions de l'insert 20 non recouvertes par de la matière surmoulée (et donc « libres » d'une telle matière) sont des premiers moyens 50 d'indexage de la coulisse vis-à-vis du cadre de porte 40, selon l'axe X, et des seconds moyens 60 d'indexage d'un enjoliveur 70 sur la coulisse 30, selon les axes X et Z (figures 8 et 9). Par ailleurs, dans l'exemple représenté, l'insert 20 comprend une mire 80 qui est libre de matière surmoulée, comme cela sera décrit plus en détail dans ce qui suit, afin d'autoriser le contrôle par laser de la coulisse après sa fabrication.

Un mode de réalisation de l'insert 20 est représenté aux figures 6a et 6b. Dans l'exemple représenté, il comprend pour l'essentiel un plateau supérieur 21 portant un pion 22 en saillie et formant les premiers moyens d'indexage 50, et une plaque inférieure 23 portant les seconds moyens d'indexage 60.

Le plateau 21 est plan et a une forme générale allongée le long de l'axe X en utilisation. Il comprend une face supérieure plane 21a sur laquelle est situé en saillie le pion 22. Il est de plus relié à la plaque 23 par une face intérieure 21b (orientée vers l'intérieur du véhicule) ou inférieure, par l'intermédiaire d'une liaison amincie 24. Dans l'exemple représenté, il a en section transversale (dans un plan YOZ) une forme générale triangulaire.

Le plateau 21 est conformé pour s'étendre le long et sous la feuillure 46 et est apte à venir en appui contre elle, donc contre sa surface inférieure, comme cela est visible à la figure 8.

Le pion 22 est conformé pour être engagé dans l'encoche 48 de la feuillure 46. Il est donc dimensionné pour être accueilli dans cette encoche 48 et en particulier dans la découpe en U de la tôle inférieure. Il a en particulier une hauteur (ou dimension le long de l'axe Z) supérieure à l'épaisseur de la feuillure le long du même axe, et une largeur (ou dimension le long de l'axe X) légèrement inférieure à la largeur de l'encoche 48 le long du même axe. Les bords latéraux 22a, 22b opposés du pion 22, situés respectivement vers l'avant et vers l'arrière du véhicule en utilisation, sont configurés pour coopérer par coulissement et butée avec les bords latéraux en regard de l'encoche 48 de la feuillure 46. Le coulissement a lieu selon l'axe Y et les butées se font selon l'axe X. Par ailleurs, le plateau 21 coopère par appui selon l'axe Z avec la feuillure 46. Comme on le voit à la figure 5, le plateau 21 et le pion 22 sont libres de matière surmoulée, les figures 4 et 9 permettant toutefois de constater qu'ils sont situés derrière le brin supérieur 1b de la coulisse 30.

La liaison amincie 24 comprend une projection 25 vers l'intérieur au sommet duquel est située la mire 80. La projection 25 est destinée à être revêtue de matière surmoulée alors que son sommet et donc la mire 80 ne le sont pas. La mire 80 est ici réalisée par un motif en relief représentant un cercle à l'intérieur duquel sont disposés deux barres entrecroisées en X. Elle pourrait avoir une autre forme. Dans l'exemple représenté, la liaison amincie 24 a une forme générale qui facilite l'ancrage de l'insert 20 dans la matière surmoulée. Elle permet en outre une certaine souplesse de l'insert et donc du coin 10 en flexion dans un plan XOZ.

Le plateau 21 est reliée par la liaison amincie 24 à l'extrémité supérieure de la plaque 23 qui est sensiblement plane et s'étend dans le plan XOZ. La plaque 23 comprend deux faces respectivement intérieure 23a et extérieure 23b. La face intérieure 23a comprend des plots 26 de positionnement et/ou d'ancrage et les seconds moyens d'indexage 60 sont situés sur la face extérieure 23b.

Ces moyens 60 comprennent ici un rebord périphérique 27 en O ou de forme générale oblongue qui est formé en saillie sur la face 23b et qui définit intérieurement un évidement 28 de réception d'un doigt 72 de l'enjoliveur 70 (figure 9). La forme oblongue ou en O est préférée de façon à ce que les coins du rebord soient arrondis.

Comme cela est visible à la figure 9, l'évidement 28 a en section dans un plan ZOY une forme générale trapézoïdale dont la grande base 28a est située au niveau de l'ouverture de l'évidement 28 et la petite base 28b est située au niveau du fond de l'évidement. Cette forme confère à l'évidement un profil en cône, c'est-à-dire à diminution de section, le long de l'axe Y, de l'extérieur vers l'intérieur du véhicule. Le doigt 72 a une forme complémentaire à celle de cet évidemment 28, ce qui facilite le guidage du doigt 72 et le positionnement de l'enjoliveur 70 lors du montage.

La plaque 23 est destinée à être revêtue de matière surmoulée. Le long de l'axe Y, la matière surmoulée s'étend jusqu'au sommet ou bord libre du rebord 27, comme cela est visible à la figure 5, l'évidement 28 étant libre de cette matière.

La coulisse 30 de la figure 4 est montée sur un cadre 40 de porte automobile de la façon suivante. La coulisse 30 est présentée sur le cadre 40 de sorte que ses brins 1a, 1b soient sensiblement alignés avec le profilé 44 et le montant 42 du cadre. Le plateau 21 et le pion 22 de l'insert 20 sont alors utilisés pour positionner correctement la coulisse sur le cadre de porte, le pion devant être engagé dans l'encoche 48 de la feuillure 46 par déplacement selon l'axe Y, jusqu'à ce qu'il vienne sensiblement en appui au fond de l'encoche. Lors de ce déplacement, le brin supérieur 1b de la coulisse est clippé sur la feuillure 46 sur toute sa longueur. L'enjoliveur 70 ou un autre élément analogue peut alors être monté sur la coulisse en engageant le doigt 72 dans l'évidement 28, l'enjoliveur étant destiné à s'étendre le long du pied milieu du cadre de porte 40.

La figure 10 illustre une variante de réalisation de l'insert qui diffère de celui décrit dans ce qui précède en ce qu'il comprend une mire 81 disposée dans une autre zone. L'insert de la figure 10 peut comprendre la mire 80 décrite dans ce qui précède ainsi que la mire 81, ou bien la mire 81 peut remplacer la mire 80.

La mire 81 est située sur la face extérieure 23b de la plaque 23 et plus exactement au niveau des seconds moyens 60, au fond de l'évidement 28. On comprend dès lors que cette mire 81 sera visible après surmoulage de l'insert puisque l'évidement doit rester libre de matière surmoulée pour pouvoir accueillir le doigt de l'enjoliveur.

La mire 81 est sensiblement située au milieu de l'évidement 28. Elle est de préférence située au droit du pion 22. Comme évoqué dans ce qui précède, le brin supérieur s'étend devant le pion 22 et le masque. L'opérateur peut s'aider de la mire 81, pour avoir une idée précise de la position du pion 22, pour positionner la coulisse lors de son montage et faciliter l'insertion du pion dans l'encoche de la feuillure du cadre de porte. La mire 81 peut en outre servir à contrôler la coulisse après fabrication, comme c'est le cas de la mire 80.

Les exemples particuliers de réalisation de l'insert 20 des figures 3 et suivantes permettent de remédier aux difficultés de positionnement et intègrent trois fonctions : l'indexage selon l'axe X de la coulisse, l'indexage de l'enjoliveur, et la ou les mires.

Il présente de nombreux avantages :
- pour une meilleure visibilité au montage, l'indexage du brin supérieur de la coulisse est fait sur la feuillure du cadre directement, par l'encoche dans laquelle vient se loger le pion non surmoulé de l'insert ;
- pour un indexage plus simple de l'enjoliveur 70, l'insert est pourvu non pas d'une encoche horizontale mais d'un évidement sensiblement oblong en léger contrebas, orienté vers l'extérieur du véhicule. Sa forme arrondie et légèrement conique permet une mise en position guidée de l'enjoliveur, avec auto-centrage, tout en conservant un jeu tolérant de positionnement. Cette zone d'accueil de l'enjoliveur est également non recouverte par la matière surmoulée ; et
- pour un contrôle dimensionnel de la pièce finie, la mire n'est pas surmoulée pour rester visible.

Le matériau de l'insert 20 est préférentiellement du polyamide (PA) 6.6 chargé en fibre de verre à 30%, avec un revêtement adhérisant pour permettre la bonne accroche du mélange de surmoulage. D'autres matières sont susceptibles d'être employées, comme du POM, du PA différemment chargé, etc.

## Revendications

1. Insert (20) pour une coulisse (30) de vitrage de véhicule, cet insert étant destiné à être surmoulé pour former un coin (10) de liaison entre deux brins (1a, 1b) de la coulisse, l'insert étant formé d'une seule pièce et comportant des premiers moyens d'indexage (50) configurés pour coopérer avec une portion d'un cadre de porte (40) du véhicule destiné à être situé d'un côté intérieur du véhicule, et des seconds moyens d'indexage (60) configurés pour coopérer avec une portion d'un enjoliveur (70) destiné à être rapporté sur l'un desdits brins du côté extérieur du véhicule, dont lesdits premiers moyens comprennent au moins un pion (22) en saillie configuré pour être engagé dans une encoche (48) d'une feuillure (46) du cadre de porte du véhicule afin d'assurer un indexage dudit insert selon un axe X sensiblement parallèle à un axe d'allongement de la feuillure, et dont lesdits seconds moyens sont configurés pour coopérer par complémentarité de formes avec ladite portion de l'enjoliveur afin d'assurer un indexage dudit enjoliveur selon ledit axe X ainsi que selon un axe Z perpendiculaire à X et sensiblement parallèle à un axe d'allongement dudit enjoliveur.

2. Insert (20) selon la revendication précédente, dans lequel il comprend un plateau (21) configuré pour s'étendre parallèlement à la feuillure (46) et sur lequel est situé en saillie ledit pion (22).

3. Insert (20) selon la revendication 1 ou 2, dans lequel il comprend une plaque (23) configurée pour s'étendre perpendiculairement à un plan de la feuillure (46) et sur une face (23b) de laquelle sont situés lesdits seconds moyens (60).

4. Insert (20) selon la revendication précédente, dans lequel la plaque (23) comprend une face extérieure (23b) sur laquelle sont situés lesdits seconds moyens (60), et une face intérieure (23a) sur laquelle sont situés des plots de positionnement et/ou d'ancrage (26).

5. Insert (20) selon la revendication 3 ou 4, en dépendance de la revendication 2, dans lequel le plateau (21) et la plaque (23) sont reliés par une liaison amincie (24).

6. Insert (20) selon l'une des revendications précédentes, dans lequel il comprend au moins une mire (80).

7. Insert (20) selon la revendication 6, en dépendance de la revendication 5, dans lequel il comprend une première mire (80) qui est située sur une face intérieure de ladite partie amincie (24).

8. Insert (20) selon la revendication 6 ou 7, en dépendance de la revendication 4, dans lequel il comprend une seconde mire (81) qui est située sur ladite face extérieure (23b) de ladite plaque (23).

9. Insert (20) selon l'une des revendications précédentes, dans lequel lesdits seconds moyens (60) comprennent un évidement (28) configuré pour recevoir ladite portion de l'enjoliveur (70).

10. Insert (20) selon la revendication précédente, dans lequel ledit évidement (28) a en section une forme générale trapézoïdale dont une grande base (28a) est située au niveau d'une ouverture dudit évidement et une petite base (28b) est située au niveau d'un fond dudit évidement.

11. Insert (20) selon la revendication 8 ou 9, en dépendance de la revendication 4, dans lequel lesdits seconds moyens (60) comprennent un rebord périphérique (27) en O formé en saillie sur ladite face extérieure (23b) et définissant intérieurement ledit évidement (28).

12. Coulisse (30) de vitrage de véhicule, comportant au moins deux brins (1a, 1b), tels qu'un brin horizontal et un brin vertical, reliés ensemble par un coin (10) surmoulé dans lequel est intégré un insert (20) selon l'une des revendications précédentes.

13. Coulisse (30) selon la revendication précédente, dans laquelle lesdits premiers et seconds moyens (50, 60) sont libres de matière surmoulée.

14. Coulisse (30) selon la revendication précédente, l'insert (20) étant tel que défini à la revendication 2, dans laquelle ledit pion (22) et ledit plateau (21) sont libres de matière surmoulée.

15. Coulisse (30) selon l'une des revendications 11 à 13, l'insert étant tel que défini à l'une des revendications 6 à 8, dans laquelle la ou chaque mire (80, 81) est libre de matière surmoulée.

## Patentansprüche

1. Einsatz (20) für einen Gleitfalz (30) einer Fahrzeugverglasung, wobei dieser Einsatz dazu bestimmt ist, aufgeformt zu werden, um eine Verbindungsecke (10) zwischen zwei Gliedern (1a, 1b) des Gleitfalzes zu bilden, wobei der Einsatz aus einem einzigen Stück gebildet ist und erste Positionierungsmittel (50) umfasst, die dazu konfiguriert sind, mit einem Abschnitt eines Türrahmens (40) des Fahrzeugs zusammenzuwirken, der dazu bestimmt ist, sich auf einer Innenseite des Fahrzeugs zu befinden, und zweite Positionierungsmittel (60), die dazu konfiguriert sind, mit einem Abschnitt einer Zierleiste (70) zusammenzuwirken, die dazu bestimmt ist, auf eines der Glieder auf der Außenseite des Fahrzeugs angebaut zu sein, wobei die ersten Mittel mindestens einen vorragenden Stift (22) umfassen, der dazu konfiguriert ist, in eine Kerbe (48) einer Ausfalzung (46) des Türrahmens des Fahrzeugs eingefügt zu sein, um eine Positionierung des Einsatzes gemäß einer X-Achse sicherzustellen, die im Wesentlichen zu einer Verlängerungsachse der Ausfalzung parallel ist, und die zweiten Mittel dazu konfiguriert sind, durch Formschluss mit dem Abschnitt der Zierleiste zusammenzuwirken, um eine Positionierung der Zierleiste gemäß der X-Achse sowie gemäß einer Z-Achse, die zu der X-Achse senkrecht und im Wesentlichen zu einer Verlängerungsachse der Zierleiste parallel ist, sicherzustellen.

2. Einsatz (20) nach dem vorstehenden Anspruch, der eine Tafel (21) umfasst, die dazu konfiguriert ist, sich parallel zu der Ausfalzung (46) zu erstrecken, und auf der der Stift (22) vorragend liegt.

3. Einsatz (20) nach Anspruch 1 oder 2, der eine Platte (23) umfasst, die dazu konfiguriert ist, sich senkrecht zu einer Ebene der Ausfalzung (46) zu erstrecken, und auf deren einer Fläche (23b) die zweiten Mittel (60) liegen.

4. Einsatz (20) nach dem vorstehenden Anspruch, wobei die Platte (23) eine Außenfläche (23b) umfasst, auf der die zweiten Mittel (60) liegen, und eine Innenfläche (23a), auf der Positionierungs- und/oder Verankerungsklötze (26) liegen.

5. Einsatz (20) nach Anspruch 3 oder 4, abhängig von Anspruch 2, wobei die Tafel (21) und die Platte (23) durch eine verdünnte Verbindung (24) verbunden sind.

6. Einsatz (20) nach einem der vorstehenden Ansprüche, der mindestens eine Zielvorrichtung (80) umfasst.

7. Einsatz (20) nach Anspruch 6, abhängig von Anspruch 5, der eine erste Zielvorrichtung (80), die auf einer Innenfläche des verdünnten Teils (24) liegt, umfasst.

8. Einsatz (20) nach Anspruch 6 oder 7, abhängig von Anspruch 4, der eine zweite Zielvorrichtung (81), die auf der Außenfläche (23) der Platte (23) liegt, umfasst.

9. Einsatz (20) nach einem der vorstehenden Ansprüche, wobei die zweiten Mittel (60) eine Aussparung (28), die dazu konfiguriert ist, den Abschnitt der Zierleiste (70) aufzunehmen, umfassen.

10. Einsatz (20) nach dem vorstehenden Anspruch, wobei die Aussparung (28) im Schnitt eine allgemeine Trapezform aufweist, deren große Basis (28a) auf dem Niveau einer Öffnung der Aussparung liegt, und eine kleine Basis (28b) auf dem Niveau eines Bodens der Aussparung liegt.

11. Einsatz (20) nach Anspruch 8 oder 9, abhängig von Anspruch 4, wobei die zweiten Mittel (60) einen umfänglichen Rand (27) in O umfassen, der auf der Außenfläche (23b) vorragend gebildet ist und innen die Aussparung (28) definiert.

12. Gleitfalz (30) einer Fahrzeugverglasung, der mindestens zwei Glieder (1a, 1b), wie ein horizontales Glied und ein vertikales Glied, umfasst, die miteinander durch eine aufgeformte Ecke (10) verbunden sind, in der ein aufgeformter Einsatz (20) nach einem der vorstehenden Ansprüche integriert ist.

13. Gleitfalz (30) nach dem vorstehenden Anspruch, wobei das erste und das zweite Mittel (50, 60) frei von aufgeformtem Material sind.

14. Gleitfalz (30) nach dem vorstehenden Anspruch, wobei der Einsatz (20) wie in Anspruch 2 definiert ist, wobei der Stift (22) und die Tafel (21) frei von aufgeformtem Material sind.

15. Gleitfalz (30) nach einem der Ansprüche 11 bis 13, wobei der Einsatz wie in einem der Ansprüche 6 bis 8 definiert ist, wobei die oder jede Zielvorrichtung (80, 81) frei von aufgeformtem Material ist.

## Claims

1. An insert (20) for a run slide (30) for a vehicle window, this insert being intended to be overmoulded to form a connecting wedge (10) between two strands (1a, 1b) of the run slide, the insert being formed in one piece and comprising first indexing means (50) configured to cooperate with a portion of a door frame (40) of the vehicle intended to be located at an inner side of the vehicle and second indexing means (60) configured to cooperate with a portion of a cover (70) intended to be attached to one of the said strands at the outer side of the vehicle, in which said first means comprise at least one protruding pin (22) configured to be engaged in a notch (48) of a rabbet (46) of the door frame of the vehicle in order to ensure indexing of said insert along an axis X substantially parallel to an axis of elongation of the rabbet, and in which said second means are configured to cooperate by complementary shapes with said portion of the cover in order to ensure indexing of said cover along said axis X and along an axis Z perpendicular to X and substantially parallel to an axis of elongation of said cover.

2. The insert (20) according to the preceding claim, wherein it comprises a shelf (21) configured to extend parallel to the rabbet (46) and on which said protruding pin (22) is located.

3. The insert (20) according to claim 1 or 2, wherein it comprises a plate (23) configured to extend perpendicularly to a plane of the rabbet (46) and on one face (23b) of which said second means (60) are located.

4. The insert (20) according to the preceding claim, wherein the plate (23) comprises an outer face (23b) on which said second means (60) are located, and an inner face (23a) on which positioning and/or anchoring studs (26) are located.

5. The insert (20) according to claim 3 or 4, depending on claim 2, wherein the shelf (21) and the plate (23) are connected by a thinned connection (24).

6. The insert (20) according to one of the preceding claims, wherein it comprises at least one test pattern (80).

7. The insert (20) according to claim 6, when depending on claim 5, wherein it comprises a first test pattern (80) which is located on an inner face of said thinned part (24).

8. The insert (20) according to claim 6 or 7, when depending on claim 4, wherein it comprises a second test pattern (81) which is located on said outer face (23b) of said plate (23).

9. The insert (20) according to one of the preceding claims, wherein said second means (60) comprises a recess (28) configured to receive said portion of the cover (70).

10. The insert (20) according to the preceding claim, wherein said recess (28) has a generally trapezoidal cross-sectional shape, a large base (28a) of which is located at an opening of said recess and a small base (28b) of which is located at a bottom of said recess.

11. The insert (20) according to claim 8 or 9, when depending on claim 4, wherein said second means (60) comprises a peripheral O-shaped edge (27) formed as a protrusion on said outer face (23b) and internally defining said recess (28).

12. A run slide (30) for a vehicle window comprising at least two strands (1a, 1b), such as a horizontal strand and a vertical strand, connected together by an overmoulded wedge (10) in which an insert (20) according to one of the preceding claims is integrated.

13. The run slide (30) according to the preceding claim, wherein said first and second means (50, 60) are free of overmolded material.

14. The run slide (30) according to the preceding claim, the insert (20) being as defined in claim 2, wherein said pin (22) and said shelf (21) are free of overmolded material.

15. The run slide (30) according to one of claims 11 to 13, the insert being as defined in one of claims 6 to 8, wherein the or each test pattern (80, 81) is free of overmolded material.
